Europäisches Patentamt

European Patent Office

Office européen des brevets

(11) Veröffentlichungsnummer: **0 239 752 B1**

(19)

(12) ## EUROPÄISCHE PATENTSCHRIFT

(45) Veröffentlichungstag der Patentschrift: **12.06.91**

(51) Int. Cl.⁵: **B01J 35/02,** B01D 53/34, F01N 3/10

(21) Anmeldenummer: **87101706.7**

(22) Anmeldetag: **07.02.87**

(54) Vorrichtung zur Halterung von Monolithkatalysatoren.

(30) Priorität: **01.03.86 DE 8605649 U**

(43) Veröffentlichungstag der Anmeldung:
**07.10.87 Patentblatt 87/41**

(45) Bekanntmachung des Hinweises auf die
Patenterteilung:
**12.06.91 Patentblatt 91/24**

(84) Benannte Vertragsstaaten:
**AT BE CH DE ES FR GB GR IT LI LU NL SE**

(56) Entgegenhaltungen:
**DE-A- 3 046 921**
**US-A- 4 238 455**
**US-A- 4 347 219**
**US-A- 4 561 954**

(73) Patentinhaber: **Degussa Aktiengesellschaft**
**Weissfrauenstrasse 9**
**W-6000 Frankfurt am Main 1(DE)**

(72) Erfinder: **Brand,Reinhold,Dr.**
**Hanfwiesenstrasse 11a**
**W-8752 Mömbris(DE)**
Erfinder: **Engler, Bernd, Dr.**
**Treuener Strasse 2**
**W-6450 Hanau 9(DE)**
Erfinder: **Kleine-Möllhoff, Peter**
**Freigerichter Strasse 82 a**
**W-8755 Alzenau(DE)**
Erfinder: **Koberstein, Edgar, Dr.**
**Wolfskernstrasse 8**
**W-8755 Alzenau(DE)**

**Beschreibung**

Die Erfindung betrifft eine Vorrichtung zur Halterung von viereckigen, z. B. quadratischen oder rechteckigen monolithischen keramischen Katalysatorelementen zur Herabsetzung des Schadstoffausstoßes von Verbrennungsanlagen, z. B. Feuerungsanlagen für Wärmekraftwerke, sowie zur Zusammenfassung solcher Katalysatorelemente zu einem Paket.

Keramische Monolithen erfordern wegen ihrer Bruchgefährdung unter extremen Betriebsbedingungen (Erschütterungen, Druckstöße, Temperaturwechsel) eine sichere und· stoßabsorbierende Befestigung. Da sie nicht in beliebiger Größe herstellbar sind, besteht weiterhin die Notwendigkeit, mehrere Elemente in einer Batterie zusammen zufassen, um die z. B. bei Kraftwerksabgasen pro Zeiteinheit strömenden großen Gasvolumina durchsetzen zu können. Nach der DE-A-3046921 ist est bekannt mehrere Elemente unter Zwischenlage von elastischen Materialien zusammenzufassen und in ein Metallgehäuse zu packen.

Gemäß der Erfindung ist eine Vorrichtung zur Halterung von zur Abgasnachbehandlung von Verbrennungsanlagen verwendeten viereckigen monolithischen keramischen Katalysatorelementen sowie zur Zusammenfassung derselben zu einem Paket gekennzeichnet durch

a) eine der äußeren Form des Katalysatorelements entsprechende und formschlüssig auf dieses aufschiebbare elastische Puffermanschette

b) eine in seinen Abteilungen auf der Unter- und Oberseite offenen, der Außenform von Katalysatorelement und Puffermanschette angepaßten, Zwischenstege 3 aufweisende Metallkassette 4, wobei der innere freie Querschnitt jeder Abteilung größer als die Stirnfläche des Katalysatorelements und kleiner als die Summe der Stirnflächen von Katalysatorelement und Puffermanschette oder gleich der Summe dieser Stirnflächen ist, wobei

c) Kassettentiefe und Höhe der Puffermanschette mindestens 1/5 der Länge des Katalysatorelements entsprechen.

Die Puffermanschette kann z. B. aus Mineralfaser, Keramikfaser, Drahtgestrick oder anderen temperaturfesten elastischen Werkstoffen bestehen. Nachdem sie auf ein Monolithende von der Monolithstirnseite her aufgeschoben ist, wird der mit der Manschette versehene Monolith in eine freie Abteilung der Metallkassette von oben eingeschoben, wobei die elastische Manschette verdichtet werden kann. Diese Verdichtung kann auch durch ein Manschettenmaterial, welches sich bei Erwärmung einmalig ausdehnt, erreicht oder verstärkt werden. Ein solches Material ist z. B. eine sog. Blähglimmermatte, wie sie z. B. von der Firma 3M unter der Bezeichnung INTERAM ® vertrieben wird. Die erforderliche Wärmebehandlung kann nach der Montage oder aber auch erst im Betrieb durch Beaufschlagung mit heißen Abgasen, z. B. ein heißes Rauchgas, vorgenommen werden. Auf diese Weise werden alle Abteilungen der Metallkassette mit Monolithen gefüllt.

Soll der Katalysator Betriebsbedingungen ausgesetzt werden, denen die reibschlüssige Verbindung zwischen Monolith und Puffermanschette einerseits und Puffermanschette und Kassettenzwischenstegen andererseits nicht gewachsen sein könnte, so weist nach einer bevorzugten Ausführungsform der Erfindung jede Abteilung der Metallkassette noch auf ihrer Unterseite nach innen gerichtete Anschläge 5 in Form einer die gesamte oder wenigstens gegenüberliegende Teile der Randzone der Stirnfläche des Katalysatorelements übergreifende Fläche auf. Damit wird durch Formschluß eine axiale Verschiebung des Katalysatorelements verhindert.

Gemäß dieser Ausbildung der Erfindung springen also z. B. an der unteren Stirnseite der Kassettenabteilungen gegenüberliegend angebrachte, gegebenenfalls in mehrere "Zungen" aufgeteilte Anschläge für eine Randzone der Stirnfläche des Katalysatorelements nach innen vor.

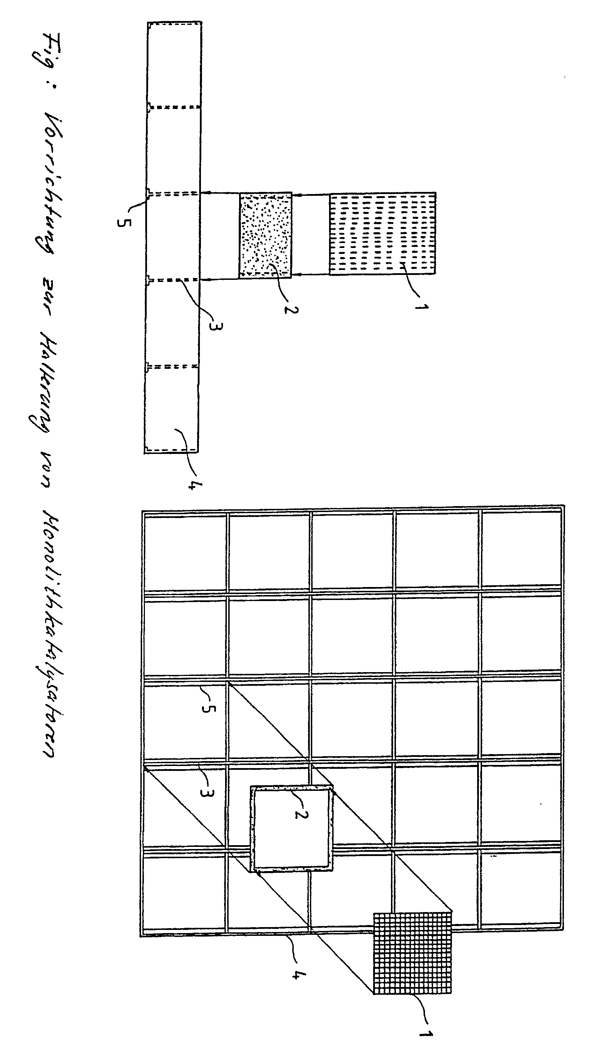

Die Erfindung wird nachfolgend anhand einer vorteilhaften Ausführungsvariante in Verbindung mit der einzigen Figur der Zeichnung weiter erläutert.

Die als Explosionszeichnung gestaltete Figur zeigt ein 20 cm langes monolithisches keramisches Katalysatorelement 1 von quadratischem Querschnitt (Kantenlänge 150 mm), welches über seine Gesamtlänge von zahlreichen quadratischen Strömungskanälen durchzogen wird, in welchen das zu behandelnde Abgas strömt und mit dem Katalysator in Berührung kommt. Dieser kann stofflicher Bestandteil des Elements sein oder auf dem keramischen Werkstoff des Elements als Beschichtung vorliegen.

Eine 10 cm lange Puffermanschette 2 aus elastischem Drahtgestrick mit geringfügig kleinerem freien inneren Querschnitt als die Stirnfläche des Monolithen (149 mm x 149 mm) wird auf letzteren so aufgezwängt, daß ihre äußere Stirnfläche bündig mit der Stirnfläche des Monolithen endigt.

Eine 10 cm tiefe, Zwischenstege 3 aufweisende Metallkassette 4 aus temperaturfestem Stahl (z.B. Werkstoff V2A), weist Abteilungen auf, welche der äußeren Form von Monolith und Manschette entsprechen und einen etwas geringeren inneren freien Querschnitt als die Summe der Stirnflächen von Katalysatorelement und Puffermanschette (158 mm x 158 mm) haben.

Jede Abteilung ist am unteren Rand mit gegenüberliegenden, jeweils senkrecht zur Stegfläche 6 mm nach innen ragenden und die Randzone der Monolithstirnfläche stützenden Anschlagblechen 5 versehen.

Bei der Montage wird jeder Monolith mit Puffermanschette in eine freie Abteilung der Metallkassette soweit eingeschoben, bis die Anschlagbleche in Kontakt mit der Monolith-Stirnfläche kommen.

**Ansprüche**

1. Vorrichtung zur Halterung von viereckigen monolithischen keramischen Katalysatorelementen sowie zur Zusammenfassung derselben zu einem Paket, gekennzeichnet durch

   a) eine der Außenform des Katalysatorelements (1) entsprechende und formschlüssig auf dieses aufschiebbare elastische Puffermanschette (2),

   b) eine in seinen Abteilungen auf der Unter- und Oberseite offenen, der Außenform von Katalysatorelement und Puffermanschette angepaßten, Zwischenstege (3) aufweisende Metallkassette (4), wobei der innere freie Querschnitt jeder Abteilung größer als die Stirnfläche des Katalysatorelements und kleiner als die Summe der Stirnflächen von Katalysatorelement und Puffermanschette oder gleich der Summe dieser Stirnflächen ist, wobei

   c) Kassettentiefe und Höhe der Puffermanschette mindestens 1/5 der Länge des Katalysatorelements entsprechen.

2. Vorrichtung nach Anspruch 1, dadurch gekennzeichnet, daß jede Abteilung der Metallkassette auf ihrer Unterseite nach innen gerichtete Anschläge (5) in Form einer die gesamte oder wenigstens gegenüberliegende Teile der Randzone der Stirnfläche des Katalysatorelementes übergreifenden Fläche aufweist.

**Claims**

1. An apparatus for supporting quadrangular monolithic ceramic catalyst elements and for combining them to a packet, characterised by

   a) an elastic buffer sleeve (2) conforming to the external form of the catalyst element (1) and designed to be pushed over the latter with a close fit,

   b) a metal cassette (4) open on the upper and under side of its compartments and adapted to the external form of the catalyst element and buffer sleeve and having intermediate webs 3, the free internal cross-section of each compartment being greater than the end face of the catalyst element and smaller than the sum of the end faces of catalyst element and buffer sleeve or equal to the sum of these end faces,

   c) the depth of the cassette and height of the buffer sleeve being at least 1/5 of the length of the catalyst element.

2. An apparatus according to claim 1, characterised in that each compartment of the metal cassette has inwardly directed abutments (5) on its underside in the form of a surface overlapping the whole or at least opposite parts of the marginal zone of the end face of the catalyst element.

**Revendications**

1. Dispositif pour le maintien d'éléments de catalyseurs monolithiques en céramique, quadrangulaires, ainsi que pour le rassemblement de ceux-ci en un paquet, caractérisé par:

   a) une manchette-tampon élastique (2) déplaçable, correspondant à la forme extérieure de l'élément de catalyseur (1) et de forme déterminée par rapport à celui-ci,

   b) un caisson métallique (4) possédant des traverses intermédiaires (3) dans des compartiments ouverts sur la face inférieure et sur la face supérieure adaptées à la forme extérieure de l'élément de catalyseur et à la manchette-tampon, pour lequel la section transversale libre interne de chaque compartiment est plus grande que la surface frontale de l'élément de catalyseur, et plus petite que la somme des surfaces frontales de l'élément de catalyseur et de la manchette-tampon ou égal à la somme de ces surfaces frontales pour lequel,

   c) la profondeur du caisson et la hauteur de la manchette-tampon correspondent au moins au cinquième de la longueur de l'élément de catalyseur.

2. Dispositif selon la revendication 1, caractérisé en ce que chaque compartiment du caisson métallique présente des butées (5) dirigées vers l'intérieur sur leur face inférieure, sous la forme de surfaces qui débordent la totalité des parties ou tout au moins les parties opposées de la zone de bordure des faces frontales de l'élément de catalyseur.

Fig.: Vorrichtung zur Halterung von Monolithkatalysatoren